# EUROPEAN PATENT SPECIFICATION

(11) **EP 4 410 850 B1**
(45) Date of publication and mention of the grant of the patent: **28.01.2026**
(21) Application number: 22872640.2
(22) Date of filing: 26.08.2022
(51) Int. Cl.: C08F 214/26, C08F 214/18, C08J 5/18

(54) **COPOLYMER AND MOLDED ARTICLE**
COPOLYMER UND FORMKÖRPER
COPOLYMÈRE ET ARTICLE MOULÉ

(30) Priority: 27.09.2021 JP 2021156398
(43) Date of publication of application: 07.08.2024
(73) Proprietor: DAIKIN INDUSTRIES, LTD., Osaka-shi, Osaka 530-0001 (JP)
(72) Inventor: YANO, Ryouichi, Osaka-shi, Osaka 530-0001 (JP); FURUTANI, Takahiro, Osaka-shi, Osaka 530-0001 (JP)
(74) Representative: Hoffmann Eitle
(86) International application number: PCT/JP2022/032183
(87) International publication number: WO 2023/047884

(56) References cited:
- EP-A1- 0 992 518
- WO-A1-2008/038682
- WO-A1-2008/038682
- WO-A1-2016/076369
- WO-A1-2016/076369
- WO-A1-2019/216239
- WO-A1-2020/157238
- WO-A1-2021/054363
- WO-A1-2021/054364
- WO-A1-2022/059271
- CN-A- 106 633 548
- CN-A- 108 102 260
- JP-A- 2015 500 377
- US-A1- 2009 186 986

## Description

### Technical Field

The present disclosure relates to a copolymer and a formed article.

### Background Art

A fluorine-containing polymer is a polymer used in quite a number of fields. As monomers for use in production of such a polymer, tetrafluoroethylene, vinylidene fluoride, hexafluoropropylene, etc. are well known.

A production method of 1,2-difluoroethylene is disclosed in Patent Literature 1. Further, the compounds and a polymer made from the same are disclosed in Patent Literature 2, 3 and Non Patent Literature 1. Patent Literature 4 discloses heat resistant fluorinated polymers with a low refractive index and with high transparency. Patent Literature 5 discloses compositions of fluorinated polymers with low haze and high total light transmittance.

### Citation List

### Patent Literature

Patent Literature 1: International Publication No. WO 2019216239
Patent Literature 2: Chinese Patent Application Publication No. 108102260
Patent Literature 3: Chinese Patent Application Publication No. 106633548
Patent Literature 4: WO 2021054364 Patent Literature 5: WO 2020157238 Non

### Patent Literature

Non Patent Literature 1: Poly(vinylene fluoride), Synthesis and Properties, W. S. Durrell et. al. Journal of Polymer Science: Part A, Vol. 3, P. 2975-2982 (1965)

### Summary of Invention

### Technical Problem

An object of the present disclosure is to provide a novel copolymer having a structure derived from 1,2-difluoroethylene, and a formed article thereof. Solution to problem

The present disclosure relates to a copolymer comprising a structural unit (A) derived from 1,2-difluoroethylene, a structural unit (B) derived from tetrafluoroethylene, and a structural unit (C) represented by the following structural formula (1), wherein a copolymerization ratio between the structural unit (A) and the structural unit (B) is 10/90 to 85/15 mol%, and a content of the structural unit (C) is 0.1 to 30 mol% relative to the total amount of resin, and an amount of structural units other than the structural units (A) to (C) is 15 mol% or less relative to the total amount of the copolymer. 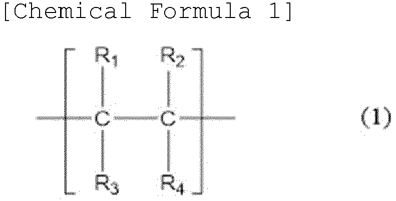 wherein R₁ is fluorine, a partly or wholly fluorinated hydrocarbon group having 5 or less carbon atoms, or an OR₅ group, wherein the R₅ group is a partly or wholly fluorinated hydrocarbon group having 5 or less carbon atoms, and R₂, R₃ and R₄ are each independently hydrogen or fluorine.

It is preferable that the copolymer have a refractive index of 1.320 to 1.380. The copolymer formed into a pressed sheet having a thickness of 0.5 mm preferably has a total light transmittance of 80% or more and a haze value of 45% or less. The copolymer preferably has a melting point of 100°C or more.

It is preferable that the structural unit (C) include a structure derived from at least one monomer selected from the group consisting of hexafluoropropylene, 2,3,3,3-tetrafluoropropene, 1,3,3,3-tetrafluoropropene (Z-form) and 1,3,3,3-tetrafluoropropene (E-form) and perfluoromethyl vinyl ether. The content of the structural unit (C) is preferably 4.0 to 27 mol% relative to the total amount of resin.

The present disclosure relates also to a formed article containing the copolymer described in any of the above, wherein the formed article is a film, a sheet, a tube, a hose, a sealing material, an electric wire coating material, an optical fiber cable, or a melt-spun fiber.

### Advantageous Effects of Invention

The copolymer of the present disclosure requires a specific structural unit. Thereby, a novel copolymer having properties that have been difficult to obtain from conventional fluoropolymers can be made.

### Description of Embodiment

The present disclosure is described in detail as follows. The present disclosure relates to a copolymer having a structural unit (A) derived from 1,2-difluoroethylene, a structural unit (B) derived from tetrafluoroethylene, and a structural unit (C) derived from the structural formula (1) described above.

A copolymer with the structural unit (B) has a lower refractive index than a homopolymer made of the structural unit (A) alone. Accordingly, in order to obtain a resin having a low refractive index, a combination use thereof is preferred. A copolymer consisting only of the structural unit (A) and the structural unit (B), however, tends to have a deteriorated transparency. Therefore, by further including the structural unit (C) in a predetermined proportion, a resin can have both of a low refractive index and an excellent transparency. Moreover, the resin composition of the present disclosure is a melt-formable resin, which can be suitably used in the field of melt-forming. Furthermore, the resin composition can be suitably used in the field of various coating materials.

### (Structural unit (A))

Although 1,2-difluoroethylene is a known compound of which use as refrigerant has been conventionally studied, almost no study on use as a polymerization monomer has been performed.

The 1,2-difluoroethylene has a trans-isomer (E-form) and a cis-isomer (Z-form).

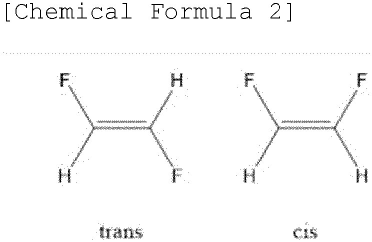

Therefore, the steric configuration is different depending on using a trans-isomer alone as the starting material, using a cis-isomer alone as the starting material, or using a mixture thereof as the starting material. The copolymer of the present disclosure may be any of these. Further, the copolymer may be a mixture including these at any proportion.

Further, a copolymer can be obtained from the 1,2-difluoroethylene and another monomer by a commonly used method. Further, the copolymerization ratio thereof can be easily changed. Accordingly, a copolymer having a specific monomer ratio of the present invention can be easily obtained.

In Non Patent Literature 1, a polymer obtained by a polymerization reaction using a monomer represented by the following general formula (10) or a monomer composition containing the same as raw material is disclosed. However, in Non Patent Literature 1, a polymer having the structural unit (B) is not disclosed.

According to Non Patent Literature 1, a polymer having high purity cannot be obtained. Accordingly, a similar polymer as in the present disclosure cannot be obtained. According to the study by the present inventors, synthesis of a compound represented by the general formula (10) by the synthesis method in Non Patent Literature 1 generates various impurities such as vinylidene fluoride. Further, in Non Patent Literature 1, the precursor has a purity of 90%, so that a component derived from the impurities in the precursor is also generated. According to Non Patent Literature 1, the impurities are removed by a dry ice trap (-78°C). However, high-boiling point compounds cannot be removed by such a method. As described above, according to Non Patent Literature 1, the glass transition temperature of the polymer is about 50°C. In consideration of the description, a high-purity monomer cannot be obtained in Non Patent Literature 1.

Since the copolymer of the present disclosure is expected to have various effects derived from a specific resin composition, in the present disclosure, it is preferable that the copolymer be obtained with use of a compound represented by 1,2-difluoroethylene having a monomer purity of 99.5 mass% or more, (more preferably 99.8 mass% or more, and most preferably 99.9 mass% or more), as a starting material.

### (Structural unit (B))

The copolymer of the present disclosure further has a structural unit (B) derived from tetrafluoroethylene. By having such structural units, the copolymer that exhibits the specific effects of the present disclosure can be obtained.

### (Structural unit (C))

The copolymer of the present disclosure has the structural unit (C) derived from the following structural formula (1) at a specific proportion.

Such a copolymer has a low refractive index and has heat resistance with moderate crystallinity maintained. Furthermore, a resin having good transparency can be made therefrom.

The structural Unit (C) is represented by: 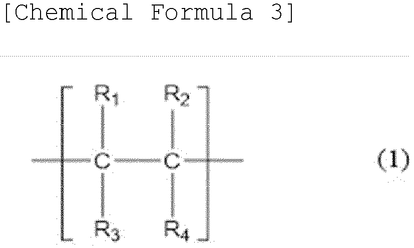 wherein R₁ is fluorine, a partly or wholly fluorinated hydrocarbon group having 5 or less carbon atoms, or OR₅ group, wherein R₅ group is a partly or wholly fluorinated hydrocarbon group having 5 or less carbon atoms; R₂, R₃ and R₄ are each independently hydrogen or fluorine. The structural unit (C) is different from the structural unit (B), and a structural unit derived from tetrafluoroethylene is not included in the structural unit (C).

Examples of the structural unit represented by the general formula (1) include a structure derived from an ethylene-based monomer of which at least one hydrogen atom may be substituted with fluorine, a structure derived from a propylene-based monomer of which at least one hydrogen atom may be substituted with fluorine, a structure derived from a butene-based monomer of which at least one hydrogen atom may be substituted with fluorine, and a structure derived from a pentene-based monomer of which at least one hydrogen atom may be substituted with fluorine. The copolymer of the present disclosure may include two or more structural units in combination corresponding to the structural unit (C). The structural unit represented by the general formula (1) is preferably at least one structural unit selected from the group consisting of structural units represented by the following general formulas (2) to (6).

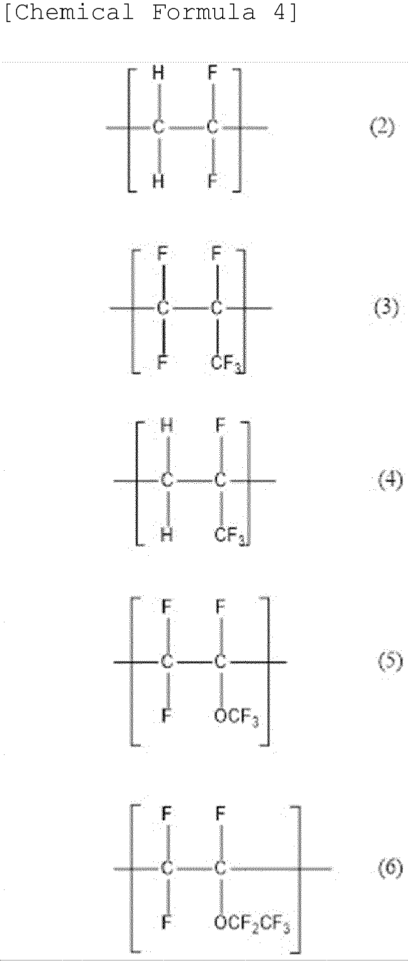

Further, it is particularly preferable that the structural unit (C) be a structure derived from at least one selected from the group consisting of hexafluoropropylene, 2,3,3,3-tetrafluoropropene, 1,3,3,3-tetrafluoropropene (Z-form), 1,3,3,3-tetrafluoropropene (E-form), and perfluoromethyl vinyl ether. Since these monomers are generally known, they are inexpensive and readily available, allowing the object of the present disclosure to be suitably achieved.

The copolymer of the present disclosure has a copolymerization ratio between the structural unit (A) and the structural unit (B) of 10/90 to 85/15 mol%. Such a range is preferred, because a resin having a low refractive index can be obtained. Too much of any one of the structural units (A) and (B) is not preferred, because a sufficiently low refractive index cannot be obtained. The copolymerization ratio is more preferably 15/85 to 85/15 mol%, more preferably 15/85 to 82/18 mol%.

In the copolymer of the present disclosure, the content of the structural unit (C) is 0.1 to 30 mol% relative to the total amount of the resin. The content of the structural unit (C) is preferable, because the transparency can be improved with the crystallinity maintained. In contrast, a content of the structural unit (C) of more than 30 mol% is not preferred, because the resin tends to be an amorphous resin or an elastomer with lowered crystallinity, incapable of maintaining a formed product in an atmosphere at relatively high temperature. The upper limit of the content of the structural unit (C) is more preferably 30 mol%, most preferably 27 mol%.

A content of the structural unit (C) of less than 0.1 mol% is not preferable, because it is difficult to balance the low refractive index with the transparency. The lower limit of the content of the structural unit (C) is more preferably 1.0 mol%, most preferably 4.0 mol%.

The copolymer of the present disclosure may have structural units other than the structural units (A) to (C) described above in a range not impairing the effect of the present disclosure, or may be made of the structural units (A) to (C) only. The amount of structural units other than the structural units (A) to (C) used is 15 mol% or less, and preferably 10 mol% or less, relative to the total amount of the copolymer, though not limited thereto.

The copolymer of the present disclosure preferably has a refractive index of 1.320 to 1.380. That is, it is preferable to make a copolymer with a low refractive index. A copolymer that satisfies such a refractive index can be suitably used in applications that require a low refractive index, such as optical applications. The copolymer of the present disclosure may have a refractive index within the range described above through adjustment of the compounding ratio of monomers.

The lower limit of the refractive index is more preferably 1.320, and most preferably 1.328. The upper limit of the refractive index is more preferably 1.380, and most preferably 1.378.

The copolymer of the present disclosure formed into a pressed sheet having a thickness of 0.5 mm preferably has a total light transmittance of 80% or more and a haze value of 45% or less. In other words, the copolymer of the present disclosure has an excellent light transmittance and a small haze value, and thus can be a copolymer having excellent transparency. A copolymer having such a refractive index may be suitably used in applications that require transparency, including optical applications. The copolymer of the present disclosure within the range described above may be obtained through adjustment of the resin composition thereof.

The above "formation of a pressed sheet having a thickness of 0.5 mm" was performed by compression molding of copolymer powder at a temperature 20 to 40°C higher than the melting point of the copolymer to obtain a sheet-like formed article having a thickness of 0.5 mm.

The total light transmittance of the pressed sheet having a thickness of 0.5 mm obtained by the method described above was measured according to JIS K7361-1, and the haze thereof was measured according to JIS K7136, respectively. HAZE Meter NDH7000SP (manufactured by Nippon Denshoku Industries Co., Ltd.) is used as the measuring instrument.

It is more preferable that the copolymer of the present disclosure have a refractive index, a total light transmittance, and a haze value within the ranges described above, respectively. That is, it is preferable that a copolymer have a low refractive index and an excellent transparency. Such a copolymer is preferred because it can be used particularly suitably in optical applications.

It is preferable that the copolymer of the present disclosure have a melting point of 100°C or more. That is, it is preferable that the resin be a crystalline resin having a melting point and that the melting point be 100°C or more. A melting point of 100°C or more is preferred because a resin having excellent heat resistance can be obtained.

The melting point may be measured according to ASTM D4591 using a differential scanning calorimeter. Specifically, using a differential scanning calorimeter RDC220 (manufactured by Seiko Instruments Inc.), heat measurement of the copolymer is performed at a temperature-increasing rate of 10°C/min, and the temperature corresponding to the peak of the resulting endothermic curve is designated as the melting point.

The method for producing the copolymer of the present disclosure is not limited, and may include any general polymerization method such as solution polymerization, emulsion polymerization, and suspension polymerization. The solvent, emulsifier, initiator, etc. for use in the polymerization are not limited, and commonly used known ones may be used.

### (Polymerization method)

The copolymer of the present disclosure may be obtained by copolymerizing monomers from which the structural units (A) to (C) are derived.

The structural unit (A) is based on a monomer represented by:

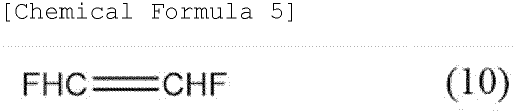

The compound represented by the general formula (10) is a known compound, which can be produced, for example, by the method described in Patent Literature 1.

The polymerization is performed using a compound represented by the general formula (10) having a purity of, preferably 99.5 mass% or more. The purity is more preferably 99.8 mass% or more, still more preferably 99.9 mass% or more. The production method of the compound represented by the general formula (10) having a purity of 99.9 mass% or more is not limited, and examples thereof include preparative gas chromatography and multistage rectification.

With use of a monomer represented by the general formula (10) with a large content of impurities, a copolymerization component is hardly taken in the copolymer, which causes a problem of failure in obtaining a desired resin. Specifically, in copolymerization with hexafluoropropylene, almost no hexafluoropropylene unit is taken in the copolymer, according to Non Patent Literature 1. In contrast, according to an experiment performed by the present inventors, with use of a high-purity monomer as raw material, a copolymer of hexafluoropropylene and a monomer represented by the general formula (10) can be obtained.

As described above, it has been shown that with use of a high-purity monomer, disposition of the copolymerization is different in comparison to the case with use of a low-purity monomer. Thereby, a copolymer with a novel composition different from that of Non

### Patent Literature can be obtained.

The copolymer of the present disclosure may be produced by copolymerization of 1,2-difluoroethylene, tetrafluoroethylene and the structural unit (C) in the presence of a polymerization initiator, such that each of the monomer units is within the content range described above.

The copolymerization may be solution polymerization, bulk polymerization, emulsion polymerization, suspension polymerization, or the like. From the viewpoint of easy industrial practice, emulsion polymerization, suspension polymerization and solution polymerization are preferred, and solution polymerization and suspension polymerization are more preferred.

As the polymerization initiator, an oil-soluble radical polymerization initiator or a water-soluble radical polymerization initiator may be used, and an oil-soluble radical polymerization initiator is preferred.

The oil-soluble radical polymerization initiator may be a known oil-soluble peroxides, and typical examples thereof include dialkyl peroxycarbonates such as di-n-propyl peroxydicarbonate, diisopropyl peroxydicarbonate, di-sec-butyl peroxydicarbonate, and di-2-ethoxyethyl peroxydicarbonate; peroxyesters such as t-butyl peroxyisobutyrate and t-butyl peroxypivalate; dialkyl peroxides such as di-t-butyl peroxide; and di[fluoro (or fluorochloro)acyl]peroxides.

Examples of di[fluoro(or fluorochloro)acyl] peroxides include a diacyl peroxide represented by [(RfCOO)-]₂, wherein Rf is a perfluoroalkyl group, a ω-hydro perfluoroalkyl group or a fluorochloroalkyl group.

Examples of di[fluoro(or fluorochloro)acyl] peroxides include di(ω-hydro-dodecafluorohexanoyl) peroxide, di(ω-hydro-tetradecafluoroheptanoyl)peroxide, di(ω-hydro-hexadecafluorononanoyl)peroxide, di(perfluoropropionyl)peroxide, di(perfluorobutyryl)peroxide, di(perfluoropareryl)peroxide, di(perfluorohexanoyl)peroxide, di(perfluoroheptanoyl)peroxide, di(perfluorooctanoyl)peroxide, di(perfluorononanoyl)peroxide, di(ω-chloro-hexafluorobutyryl)peroxide, di(ω-chloro-decafluorohexanoyl)peroxide, di(ω-chloro-tetradecafluorooctanoyl)peroxide, ω-hydro-dodecafluoroheptanoyl-ω-hydrohexadecafluorononanoyl-peroxide, ω-chloro-hexafluorobutyryl-ω-chloro-decafluorohexanoyl-peroxide, ω-hydrododecafluoroheptanoyl-perfluorobutyryl-peroxide, di(dichloropentafluorobutanoyl)peroxide, di(trichlorooctafluorohexanoyl)peroxide, di(tetrachloroundecafluorooctanoyl)peroxide, di(pentachlorotetradecafluorodecanoyl)peroxide, and di(undecachlorotriacontafluorodocosanoyl)peroxide.

The water-soluble radical polymerization initiator may be a known water-soluble peroxide, and examples thereof include ammonium salts, potassium salts and sodium salts of persulfuric acid, perboric acid, perchloric acid, perphosphoric acid, percarbonic acid, or the like; organic peroxides such as disuccinic acid peroxide and diglutaric acid peroxide; t-butyl permalate and t-butyl hydroperoxide. A reducing agent such as sulfites and subsulfates may be used in combination with a peroxide, and the amount used thereof may be 0.1 to 20 times the amount of peroxide.

The amount of the radical polymerization initiator added is not limited, and an amount not allowing the polymerization rate to be significantly decrease (for example, several ppm in water) or more may be added at the beginning of the polymerization all at once, sequentially, or continuously. The upper limit is in a range that allows the heat of the polymerization reaction to be removed from the apparatus surface.

In the copolymerization described above, a surfactant, a hydrophilic compound, a chain transfer agent, and a solvent may be used, and conventionally known ones may be used, respectively.

As the surfactant, known surfactants may be used. For example, a nonionic surfactant, an anionic surfactant, and a cationic surfactant may be used, and a linear or branched fluorine-containing anionic surfactant having 4 to 20 carbon atoms such as ammonium perfluorohexanoate and ammonium perfluorooctanoate is preferred, which may contain an ether-bonding oxygen (that is, an oxygen atom may be inserted between carbon atoms). The amount added (relative to polymerization water) is preferably 10 ppm to 20 mass%, more preferably 10 to 5,000 ppm, and still more preferably 50 to 5,000 ppm. Also, a reactive emulsifier may be used as a surfactant. The reactive emulsifier is not limited as long as it is a compound having one or more unsaturated bonds and one or more hydrophilic groups, respectively, and examples thereof
include: CH₂=CFCF₂OCF(CF₃)CF₂OCF(CF₃)COONH₄, CF₂=CFCF₂CF(CF₃)OCF₂CF₂COONH₄, and CF₂=CFOCF₂CF(CF₃)OCF(CF₃)COONH₄. The amount added (relative to polymerization water) is preferably 10 to 5,000 ppm, and more preferably 50 to 5,000 ppm.

As the hydrophilic compound, a known unsaturated hydrophilic compound or a hydrophilic polymer obtained by polymerizing a known unsaturated hydrophilic compound may be used. The amount added (relative to polymerization water) is preferably 10 to 5,000 ppm, and more preferably 50 to 5,000 ppm.

Examples of the chain transfer agent include hydrocarbons such as ethane, isopentane, n-hexane, and cyclohexane; aromatics such as toluene and xylene; ketones such as acetone; esters such as ethyl acetate, butyl acetate, dimethyl malonate, diethyl malonate, dimethyl succinate; alcohols such as methanol, ethanol and isopropanol; mercaptans such as methyl mercaptan; and halogenated hydrocarbons such as carbon tetrachloride, chloroform, methylene chloride, methyl chloride, monoiodomethane, 1-iodoethane, 1-iodine-n-propane, 1-iodoperfluoropropane, 2-iodoperfluoropropane, 1-iodoperfluorobutane, 1-iodoperfluoropentane, 1-iodoperfluorohexane, 1,3-diiodoperfluoropropane, 1,3-diiodo-2-chloroperfluoropropane, 1,4-diiodoperfluorobutane, 1,5-diiodo-2,4-dichloroperfluoropentane, 1,6-diiodoperfluorohexane, 1,8-diiodoperfluorooctane, 1,12-diiodoperfluorododecane, 1,16-diiodoperfluorohexadecane, diiodomethane, 1,2-diiodoethane, 1,3-diiodo-n-propane, CF₂Br₂, BrCF₂CF₂Br, CF₃CFBrCF₂Br, CFClBr₂, BrCF₂CFClBr, CFBrClCFClBr, BrCF₂CF₂CF₂Br, BrCF₂CFBrOCF₃, 1-bromo-2-iodoperfluoroethane, 1-bromo-3-iodoperfluoropropane, 1-bromo-4-iodoperfluorobutane, 2-bromo-3-iodoperfluorobutane, 3-bromo-4-iodoperfluorobutene-1, 2-bromo-4-iodoperfluorobutene-1, monoiodomonobromo substituted benzene, diiodomonobromo substituted benzene, and (2-iodoethyl) or (2-bromoethyl) substituted benzene. These compounds may be used alone or in combination with each other. The amount of the chain transfer agent added may vary depending on the chain transfer constant of the compound used, and is usually in the range of 0.01 to 20 mass% relative to the polymerization solvent.

Examples of the solvent include water and a mixed solvent of water and alcohol.

A fluorinated solvent may be used in solution polymerization, and a fluorinated solvent in addition to water may be used in suspension polymerization. Examples of the fluorinated solvent include:
hydrochlorofluoroalkanes such as CH₃CClF₂, CH₃CCl₂F, CF₃CF₂CCl₂H and CF₂ClCF₂CFHCl; chlorofluoroalkanes such as CF₂ClCFClCF₂CF₃ and CF₃CFClCFClCF₃; hydrofluoroalkanes such as CF₃CFHCFHCF₂CF₂CF₃, CF₂HCF₂CF₂CF₂CF₂H and
CF₃CF₂CF₂CF₂CF₂CF₂CF₂H; hydrofluoroethers such as CH₃OC₂F₅, CH₃OC₃F₇CF₃CF₂CH₂OCHF₂, CF₃CHFCF₂OCH₃, CHF₂CF₂OCH₂F, (CF₃)₂CHCF₂OCH₃, CF₃CF₂CH₂OCH₂CHF₂, CF₃CHFCF₂OCH₂CF₃; and
perfluoroalkanes such as perfluorocyclobutane, CF₃CF₂CF₂CF₃, CF₃CF₂CF₂CF₂CF₃ and CF₃CF₂CF₂CF₂CF₂CF₃; and
perfluoroalkanes and hydrofluoroethers are preferred in particular. The amount of the fluorinated solvent used is preferably 10 to 100 mass% relative to an aqueous medium from the viewpoints of suspendability and economy.

The polymerization temperature and polymerization pressure depend on the type, amount and vapor pressure of the solvent used and the type of polymerization initiator used, and may be -15 to 150°C and 0 to 9.8 MPa for 1 to 24 hours. In particular, in the case of using an oil-soluble radical polymerization initiator containing fluorine atoms as polymerization initiator in solution polymerization, the polymerization temperature is preferably -15 to 70°C, more preferably 10 to 65°C. In the case of using an oil-soluble radical polymerization initiator containing a fluorine atom in emulsion polymerization and suspension polymerization, the polymerization temperature is preferably 10 to 95°C. In the case of using a water-soluble radical polymerization initiator as polymerization initiator, the polymerization temperature is preferably 10 to 95°C.

The processing after polymerization is also performed by any commonly used method, and on an as needed basis, the resulting copolymer may be dissolved in a general-purpose solvent to make a resin solution.

The copolymer of the present disclosure may be used as a material for formed articles such as films, sheets, tubes, hoses, sealing materials, electric wire coating materials, optical fiber cables, and melt-spun fibers. The present disclosure includes also such formed articles. The copolymer may also be used as a coating material.

In the case of making such a formed article, the method for forming a resin formed product from a forming material is not limited, and general forming methods such as molding, extrusion molding, injection molding, ram extrusion, press molding, vacuum molding, transfer molding, blow molding, nanoimprinting, melt spinning, and the like may be used. Further, the forming material of the present disclosure may be dissolved or dispersed in a solvent, and specifically may be dissolved in a solvent for forming by a coating method such as cast molding. The method for forming a resin formed product from a forming material is preferably extrusion molding, molding (in particular, molding by hot pressing in a mold), injection molding, or ram extrusion molding.

Specific applications of the formed articles of resin thus obtained include suitable use in the fields such as optical material, building material, electronic material, semiconductor-related material, display-related material, automobile material, ship material, aircraft material, power generation-related material, laminate, coating agent, and living ware/leisure articles.

Examples of the optical material include an optical component, spectacle lens, optical lens, optical cell, DVD disc, photo diode, anti-reflection material, and micro lens array.

Examples of the building material include a display window, a showcase, and a membrane material, roof material, ceiling material, exterior wall material, interior wall material, coating material of a membrane structure building (sports facilities, horticultural facilities, atrium, etc.). Further, examples thereof include not only a membrane material of a membrane structure building, but also a plate material for outdoor use such as noise barrier, wind-proof fence, wave overtopping protection fence, garage canopy, shopping mall, walkway wall, anti-shattering film for glass, heat-proof/water-proof sheet, tent material for tent warehouse, membrane material for shading, partial roof material for skylight, window material as substitute for glass, opening member as substitute for glass, membrane material for flame partition, curtain, exterior wall reinforcement, water-proof membrane, smoke barrier membrane, incombustible transparent partition, road reinforcement, interior (lighting, wall surface, blind, etc.), exterior (tent, signboard, etc.), large-scale greenhouse, and membrane material (roof material, ceiling material, exterior wall material, interior wall material, etc.).

Examples of the electronic material include a wiring circuit board such as printed wiring circuit board and ceramic wiring circuit board, electronics material (printed circuit board, wiring circuit board, insulating membrane, releasing film, etc.), film capacitor, electronic/electric component, exterior of home appliances, and precision machined parts.

Examples of the semiconductor-related material include a protective film of semiconductor devices (for example, an interlayer insulating film, buffer coating film, passivation film, α-ray shielding film, device sealing material, interlayer insulating film for high-density mounting boards, moisture-proof film for highfrequency devices (for example, moisture-proof film for RF circuit device, GaAs device, InP device, etc.)), a pellicle membrane, photolithography, and biochip.

Examples of the display-related material include a display, touch panel, surface protection film for various displays (for example, PDP, LCD, FED, organic EL, and projection TV), surface for electrowetting, and image forming article. Examples of the automobile material include a hood, damping material, and body.

Examples of the power generation-related material include a solar cell, intermediate of electrolyte material for solid polymer-type fuel cells, electrostatic induction-type transducing device (for example, vibration-type generator, actuator, sensor, etc.), electret used for electrostatic induction-type transducing device such as generation unit and microphone, surface material of solar cell module, mirror protection material for solar thermal power generation, surface material for solar water heater, and photovoltaic device. Examples of the laminate include a film laminated with thermoplastic resin such as polyimide.

Examples of the coating agent include water-repellent coating, mold release agent, low-reflection coating, antifouling coating, non-stick coating, water-proof/moisture-proof coating, insulating film, chemical resistant coating, etching protection film, low-refractive index film, ink-repelling coating, gas barrier film, patterned functional film, surface protection film of color filter for display, anti-fouling/anti-reflection film for solar cell cover glass, anti-fouling/anti-reflection coating of deliquescent crystal and phosphate-based glass, surface protection/anti-fouling coating of phase shift mask and photo mask, liquid-repellent coating of photo resist for immersion lithography, mold release coating of contact lithography mask, mold release coating of nano-imprint mold, passivation film of semiconductor device and integrated circuit, gas-barrier film of silver electrode of circuit board and light emitting device such as LED, liquid crystal orientation film of liquid crystal display device, lubrication coating of magnetic recording medium, gate insulating film, device with use of electrowetting principle, electret film, chemical resistant coating of MEMS process, anti-fouling coating of medical equipment, chemical resistant/anti-fouling/bio-resistant/liquid repellent coating of device using microfluidics, low-refractive material of multilayered coating of optical filter, water-repellent material for hydrophilic/water-repellent patterning, and patterned optical device.

Examples of the living ware/leisure articles include a fishing rod, racket, golf club, and projection screen.

### Examples

The present disclosure will be specifically described with reference to Examples as follows. In the following Examples, "part" and "%" represent "part by mass" and "mass%", respectively, unless otherwise specified.

### (Monomer represented by general formula (10))

The (E-)1,2-difluoroethylene for use in each of the following Examples had a purity of 99.9 mass% or more. Incidentally, the purity was determined as 99.9 mass% when no peak of impurities was identified by GC/MS. The high-purity monomer was obtained by production according to Examples in Patent Literature 1, and separation by preparative gas chromatography.

### Example 1

After introducing 600 g of deionized water and 0.3 g of methyl cellulose into a stainless steel autoclave having an internal volume of 1.8 L, the internal atmosphere of the autoclave was sufficiently replaced with vacuum nitrogen. The inside of the autoclave was then evacuated, and 450 g of hexafluoropropylene (HFP), 33 g of 1,2-difluoroethylene, and 60 g of tetrafluoroethylene (TFE) were introduced into the evacuated autoclave. The autoclave was then warmed to 29°C. Next, 3.0 g of a methanol solution containing 50 mass% of di-n-propylperoxycarbonate was fed into the autoclave, so that polymerization was initiated. The starting pressure was 1.2 MPaG. After maintaining the temperature in the autoclave at 35°C for 3.5 hours, the pressure was released to return to atmospheric pressure. The reaction product was washed with water and dried, so that 4.0 g of fluororesin powder was obtained. The resulting resin contained 1,2-difluoroethylene, TFE and HFP at a mol% ratio of 46.0/47.5/6.5. The melting point was 190.7°C.

### Example 2

After introducing 600 g of deionized water into a stainless steel autoclave having an internal volume of 1.8 L, the inside of the autoclave was sufficiently replaced with vacuum nitrogen. The inside of the autoclave was then evacuated, and 450 g of HFP, 5 g of 1,2-difluoroethylene, and 28 g of TFE were introduced into the evacuated autoclave. The autoclave was then warmed to 28°C. Next, 6.0 g of a perfluorohexane solution (DHP-H) containing 8 mass% of di-(2,2,3,3,4,4,5,5,6,6,7,7-dodecafluoro heptanoyl)peroxide was fed into the autoclave, so that polymerization was initiated. The starting pressure was 0.9 MPaG. After maintaining the temperature in the autoclave at 28°C for 2 hours, the pressure was released to return to atmospheric pressure. The reaction product was washed with water and dried, so that 3.2 g of fluororesin powder was obtained. The resulting resin contained 1,2-difluoroethylene, TFE and HFP at a mol% ratio of 25.6/62.5/11.8. The melting point was 180.0°C.

### Example 3

A 100 ml stainless steel autoclave was charged with 40 g of dichloropentafluoropropane and 0.91 g of DHP-H, cooled with dry ice and the internal atmosphere was replaced with nitrogen. The autoclave was then charged with 2.0 g of TFE, 23.9 g of HFP, 1.2 g of 1,2-difluoroethylene and shaken with a shaker at 25°C for 14.2 hours. The pressure was then released to return to atmospheric pressure, and the reaction product was dried, so that 1.42 g of fluororesin was obtained. The resulting resin contained 1,2-difluoroethylene, TFE and HFP at a mol% ratio of 73.7/17.7/8.6. The melting point was 166.5°C.

### Example 4

The internal atmosphere of a 500 ml stainless steel autoclave was sufficiently replaced with vacuum nitrogen. The inside of the autoclave was then evacuated, and 120 g of 1,1,2,2-tetrafluoroethyl-2,2,2-trifluoroethyl ether (HFE-347pc-f), 30.5 g of TFE, 155.8 g of HFP, and 2.9 g of 1,2-difluoroethylene were introduced into the evacuated autoclave. The autoclave was then warmed to 40°C. Next, 0.4 g of 2,2,3,3-tetrafluoro-1-propanol (IPP) containing 42.5 mass% of diisopropyl peroxydicarbonate was fed into the autoclave, so that polymerization was initiated. The starting pressure in the polymerization was 1.114 MPaG. After the pressure in the autoclave decreased to 1.050 MPaG, the pressure was released to return to atmospheric pressure. The product was dried, so that 5.67 g of a fluororesin was obtained. The resulting resin contained 1,2-difluoroethylene, TFE and HFP at a mol% ratio of 21.5/73.3/5.2. The melting point was 243.4°C.

### Example 5

The internal atmosphere of a 500 ml stainless steel autoclave was sufficiently replaced with vacuum nitrogen. The inside of the autoclave was then evacuated, and 120 g of HFE-347pc-f, 27.0 g of TFE, 150.0 g of HFP, and 5.1 g of 1,2-difluoroethylene were introduced into the evacuated autoclave. The autoclave was then warmed to 40°C. Next, 0.5 g of IPP was fed into the autoclave, so that polymerization was initiated. The starting pressure in the polymerization was 1.155 MPaG. After the pressure in the autoclave decreased to 1.082 MPaG, the pressure was released to return to atmospheric pressure. The product was dried, so that 3.71 g of a fluororesin was obtained. The resulting resin contained 1,2-difluoroethylene, TFE and HFP at a mol% ratio of 30.4/65.1/4.6. The melting point was 227.9°C.

### Example 6

The internal atmosphere of a 500 ml stainless steel autoclave was sufficiently replaced with vacuum nitrogen. The inside of the autoclave was then evacuated, and 200 g of HFE-347pc-f, 17.1 g of TFE, 262.0 g of HFP, and 3.7 g of 1,2-difluoroethylene were introduced into the evacuated autoclave. The autoclave was then warmed to 55°C. Next, 0.52 g of IPP was fed into the autoclave, so that polymerization was initiated. The starting pressure in the polymerization was 1.221 MPaG. After the pressure in the autoclave decreased to 1.204 MPaG, the pressure was released to return to atmospheric pressure. The product was dried, so that 2.13 g of a fluororesin was obtained. The resulting resin contained 1,2-difluoroethylene, TFE and HFP at a mol% ratio of 32.1/55.2/12.7. The melting point was 162.3°C.

### Example 7

The internal atmosphere of a 500 ml stainless steel autoclave was sufficiently replaced with vacuum nitrogen. The inside of the autoclave was then evacuated, and 200 g of HFE-347pc-f, 30.5 g of TFE, 269.2 g of HFP, and 3.0 g of 1,2-difluoroethylene were introduced into the evacuated autoclave. The autoclave was then warmed to 55°C. Next, 0.6 g of IPP was fed into the autoclave, so that polymerization was initiated. The starting pressure in the polymerization was 1.365 MPaG. After the pressure in the autoclave decreased to 1.340 MPaG, the pressure was released to return to atmospheric pressure. The product was dried, so that 2.95 g of a fluororesin was obtained. The resulting resin contained 1,2-difluoroethylene, TFE and HFP at a mol% ratio of 20.5/71.9/7.6. The melting point was 225.2°C.

### Example 8

The internal atmosphere of a 500 ml stainless steel autoclave was sufficiently replaced with vacuum nitrogen. The inside of the autoclave was then evacuated, and 200 g of HFE-347pc-f, 20.0 g of TFE, 245.0 g of HFP, and 15.0 g of 1,2-difluoroethylene were introduced into the evacuated autoclave. The autoclave was then warmed to 40°C. Next, 0.7 g of IPP was fed into the autoclave, so that polymerization was initiated. The starting pressure in the polymerization was 1.069 MPaG. After the pressure in the autoclave decreased to 1.054 MPaG, the pressure was released to return to atmospheric pressure. The product was dried, so that 2.85 g of a fluororesin was obtained. The resulting resin contained 1,2-difluoroethylene, TFE and HFP at a mol% ratio of 41.9/51.2/6.9. The melting point was 189.7°C.

### Example 9

The internal atmosphere of a 500 ml stainless steel autoclave was sufficiently replaced with vacuum nitrogen. The inside of the autoclave was then evacuated, and 200 g of HFE-347pc-f, 15.1 g of TFE, 284.7 g of HFP, and 1.2 g of 1,2-difluoroethylene were introduced into the evacuated autoclave. The autoclave was then warmed to 55°C. Next, 0.7 g of IPP was fed into the autoclave, so that polymerization was initiated. The starting pressure in the polymerization was 1.191 MPaG. After the pressure in the autoclave decreased to 1.176 MPaG, the pressure was released to return to atmospheric pressure. The product was dried, so that 1.57 g of a fluororesin was obtained. The resulting resin contained 1,2-difluoroethylene, TFE and HFP at a mol% ratio of 21.1/63.7/15.2. The melting point was 189.7°C.

### Example 10

A 100 ml stainless steel autoclave was charged with 40 g of HFE-347pc-f and 0.47 g of DHP-H, cooled with dry ice and the internal atmosphere was replaced with nitrogen. The autoclave was then charged with 5.0 g of TFE, 10.0 g of perfluoromethyl vinyl ether (PMVE), 1.1 g of 1,2-difluoroethylene and shaken with a shaker at 25°C for 6 hours. The pressure was then released to return to atmospheric pressure, and the reaction product was dried, so that 1.32 g of fluororesin was obtained. The resulting resin contained 1,2-difluoroethylene, TFE and PMVE at a mol% ratio of 38.6/51.1/10.4. The melting point was 156.5°C.

### Example 11

After 500 g of deionized water was introduced into a stainless steel autoclave having an internal volume of 1.8 L, the internal atmosphere of the autoclave was sufficiently replaced with vacuum nitrogen. The inside of the autoclave was then evacuated, and 500 g of HFE-347pc-f, 130 g of PMVE, 4 g of 1,2-difluoroethylene, and 46 g of TFE were introduced into the evacuated autoclave. The autoclave was then warmed to 28°C. Next, 3.0 g of DHP-H was fed into the autoclave, so that polymerization was initiated. The starting pressure in the polymerization was 0.52 MPaG. After the temperature in the autoclave was maintained at 28°C for 1.5 hours, the pressure was released to return to atmospheric pressure. The reaction product was washed with water and dried, so that 4.3 g of a fluororesin powder was obtained. The resulting resin contained 1,2-difluoroethylene, TFE and PMVE at a mol% ratio of 17.9/67.5/14.6. The melting point was 172.2°C.

### Example 12

After 500 g of deionized water was introduced into a stainless steel autoclave having an internal volume of 1.8 L, the internal atmosphere of the autoclave was sufficiently replaced with vacuum nitrogen. The inside of the autoclave was then evacuated, and 500 g of HFE-347pc-f, 130 g of PMVE, 3 g of 1,2-difluoroethylene, and 37 g of TFE were introduced into the evacuated autoclave. The autoclave was then warmed to 28°C. Next, 3.0 g of DHP-H was fed into the autoclave, so that polymerization was initiated. The starting pressure in the polymerization was 0.47 MPaG. After the temperature in the autoclave was maintained at 28°C for 1.3 hours, the pressure was released to return to atmospheric pressure. The reaction product was washed with water and dried, so that 2.2 g of a fluororesin powder was obtained. The resulting resin contained 1,2-difluoroethylene, TFE and PMVE at a mol% ratio of 13.8/69.0/17.2. The melting point was 176.9°C.

### Example 13

After 500 g of deionized water was introduced into a stainless steel autoclave having an internal volume of 1.8 L, the internal atmosphere of the autoclave was sufficiently replaced with vacuum nitrogen. The inside of the autoclave was then evacuated, and 500 g of HFE-347pc-f, 60 g of PMVE, 9 g of 1,2-difluoroethylene, and 34 g of TFE were introduced into the evacuated autoclave. The autoclave was then warmed to 28°C. Next, 3.0 g of DHP-H was fed into the autoclave, so that polymerization was initiated. The starting pressure in the polymerization was 0.40 MPaG. After the temperature in the autoclave was maintained at 28°C for 1 hour, the pressure was released to return to atmospheric pressure. The reaction product was washed with water and dried, so that 2.5 g of a fluororesin powder was obtained. The resulting resin contained 1,2-difluoroethylene, TFE and PMVE at a mol% ratio of 38.3/53.0/8.7. The melting point was 185.3°C.

### Example 14

After 500 g of deionized water was introduced into a stainless steel autoclave having an internal volume of 1.8 L, the internal atmosphere of the autoclave was sufficiently replaced with vacuum nitrogen. The inside of the autoclave was then evacuated, and 500 g of HFE-347pc-f, 200 g of PMVE, 3 g of 1,2-difluoroethylene, and 28 g of TFE were introduced into the evacuated autoclave. The autoclave was then warmed to 28°C. Next, 3.0 g of DHP-H was fed into the autoclave, so that polymerization was initiated. The starting pressure in the polymerization was 0.40 MPaG. After the temperature in the autoclave was maintained at 28°C for 2.1 hours, the pressure was released to return to atmospheric pressure. The reaction product was washed with water and dried, so that 2.9 g of a fluororesin powder was obtained. The resulting resin contained 1,2-difluoroethylene, TFE and PMVE at a mol% ratio of 23.1/51.0/25.9. The melting point was 101.7°C.

### Example 15

After 500 g of deionized water was introduced into a stainless steel autoclave having an internal volume of 1.8 L, the internal atmosphere of the autoclave was sufficiently replaced with vacuum nitrogen. The inside of the autoclave was then evacuated, and 500 g of HFE-347pc-f, 80 g of PMVE, 15 g of 1,2-difluoroethylene, and 27 g of TFE were introduced into the evacuated autoclave. The autoclave was then warmed to 28°C. Next, 3.0 g of DHP-H was fed into the autoclave, so that polymerization was initiated. The starting pressure in the polymerization was 0.40 MPaG. After the temperature in the autoclave was maintained at 28°C for 0.6 hour, the pressure was released to return to atmospheric pressure. The reaction product was washed with water and dried, so that 1.2 g of a fluororesin powder was obtained. The resulting resin contained 1,2-difluoroethylene, TFE and PMVE at a mol% ratio of 41.1/47.5/11.4. The melting point was 157.7°C.

### Example 16

After 500 g of deionized water was introduced into a stainless steel autoclave having an internal volume of 1.8 L, the internal atmosphere of the autoclave was sufficiently replaced with vacuum nitrogen. The inside of the autoclave was then evacuated, and 500 g of HFE-347pc-f, 110 g of PMVE, 5 g of 1,2-difluoroethylene, and 35 g of TFE were introduced into the evacuated autoclave. The autoclave was then warmed to 28°C. Next, 3.0 g of DHP-H was fed into the autoclave, so that polymerization was initiated. The starting pressure in the polymerization was 0.40 MPaG. After the temperature in the autoclave was maintained at 28°C for 0.8 hour, the pressure was released to return to atmospheric pressure. The reaction product was washed with water and dried, so that 2.1 g of a fluororesin powder was obtained. The resulting resin contained 1,2-difluoroethylene, TFE and PMVE at a mol% ratio of 13.0/64.9/22.1. The melting point was 157.5°C.

### Example 17

After 500 g of deionized water was introduced into a stainless steel autoclave having an internal volume of 1.8 L, the internal atmosphere of the autoclave was sufficiently replaced with vacuum nitrogen. The inside of the autoclave was then evacuated, and 500 g of HFE-347pc-f, 104 g of PMVE, 6 g of 1,2-difluoroethylene, and 35 g of TFE were introduced into the evacuated autoclave. The autoclave was then warmed to 28°C. Next, 6.0 g of DHP-H was fed into the autoclave, so that polymerization was initiated. The starting pressure in the polymerization was 0.42 MPaG. In order to maintain the polymerization pressure, a mixture gas having a ratio of 1,2-difluoroethylene/TFE/PMVE=25.5/59.5/15.0 mol% was circulated. After the initiation of polymerization, 6 g of DHP-H was fed into the autoclave every 90 minutes, and after 3 hours and 30 minutes, 3 g of DHP-H was fed thereto every 90 minutes. After the temperature in the autoclave was maintained at 28°C for 16.5 hours, the pressure was released to return to atmospheric pressure. The reaction product was washed with water and dried, so that 45 g of a fluororesin powder was obtained. The resulting resin contained 1,2-difluoroethylene, TFE and PMVE at a mol% ratio of 25.7/59.7/14.6. The melting point was 157.7°C.

### Example 18

After 500 g of deionized water was introduced into a stainless steel autoclave having an internal volume of 1.8 L, the internal atmosphere of the autoclave was sufficiently replaced with vacuum nitrogen. The inside of the autoclave was then evacuated, and 500 g of HFE-347pc-f, 94 g of PMVE, 13 g of 1,2-difluoroethylene, and 33 g of TFE were introduced into the evacuated autoclave. The autoclave was then warmed to 28°C. Next, 6.0 g of DHP-H was fed into the autoclave, so that polymerization was initiated. The starting pressure in the polymerization was 0.43 MPaG. In order to maintain the polymerization pressure, a mixture gas having a ratio of 1,2-difluoroethylene/TFE/PMVE=44.0/44.0/12.0 mol% was circulated. After the initiation of polymerization, 6 g of DHP-H was fed into the autoclave every 90 minutes, and after 9 hours, 3 g of DHP-H was fed thereto every 60 minutes. After the temperature in the autoclave was maintained at 28°C for 14.5 hours, the pressure was released to return to atmospheric pressure. The reaction product was washed with water and dried, so that 42 g of a fluororesin powder was obtained. The resulting resin contained 1,2-difluoroethylene, TFE and PMVE at a mol% ratio of 44.4/43.6/12.0. The melting point was 137.9°C.

### Example 19

After 1,280 g of deionized water was introduced into a glass-lined stainless steel autoclave having an internal volume of 4.1 L, the internal atmosphere of the autoclave was sufficiently replaced with vacuum nitrogen. The inside of the autoclave was then evacuated, and 1,000 g of HFE-347pc-f, 340 g of PMVE, 18 g of 1,2-difluoroethylene, and 101 g of TFE were introduced into the evacuated autoclave. The autoclave was then warmed to 28°C. Next, 3.0 g of DHP-H was fed into the autoclave, so that polymerization was initiated. The starting pressure in the polymerization was 0.50 MPaG. After the temperature in the autoclave was maintained at 28°C for 1 hour, the pressure was released to return to atmospheric pressure. The reaction product was washed with water and dried, so that 5.7 g of a fluororesin powder was obtained. The resulting resin contained 1,2-difluoroethylene, TFE and PMVE at a mol% ratio of 26.8/55.0/18.2. The melting point was 141.1°C.

### Example 20

A 100 ml stainless steel autoclave was charged with 40 g of dichloropentafluoropropane and 0.43 g of DHP-H, cooled with dry ice and the internal atmosphere was replaced with nitrogen. The autoclave was then charged with 6.0 g of TFE, 0.5 g of 2,3,3,3-tetrafluoropropene (HFO-1234yf), 5.5 g of 1,2-difluoroethylene and shaken with a shaker at 25°C for 1.3 hours. The pressure was then released to return to atmospheric pressure, and the reaction product was dried, so that 0.41 g of fluororesin was obtained. The resulting resin contained 1,2-difluoroethylene, TFE and HFO-1234yf at a mol% ratio of 44.1/40.0/15.9. The melting point was 109.7°C.

### Example 21

The internal atmosphere of a 500 ml stainless steel autoclave was sufficiently replaced with vacuum nitrogen. The inside of the autoclave was then evacuated, and 200 g of HFE-347pc-f, 45.0 g of TFE, 2.5 g of HFO-1234yf, and 13.2 g of 1,2-difluoroethylene were introduced into the evacuated autoclave. The autoclave was then warmed to 25°C. Next, 2.0 g of DHP-H was fed into the autoclave, so that polymerization was initiated. The starting pressure in the polymerization was 0.871 MPaG. After the pressure in the autoclave decreased to 0.856 MPaG, the pressure was released to return to atmospheric pressure. The reaction product was dried, so that 1.90 g of a fluororesin was obtained. The resulting resin contained 1,2-difluoroethylene, TFE and HFO-1234yf at a mol% ratio of 32.7/58.5/8.8. The melting point was 189.7°C.

### Example 22

The internal atmosphere of a 500 ml stainless steel autoclave was sufficiently replaced with vacuum nitrogen. The inside of the autoclave was then evacuated, and 200 g of HFE-347pc-f, 21.0 g of TFE, 2.6 g of HFO-1234yf, and 33.5 g of 1,2-difluoroethylene were introduced into the evacuated autoclave. The autoclave was then warmed to 25°C. Next, 2.0 g of DHP-H was fed into the autoclave, so that polymerization was initiated. The starting pressure in the polymerization was 0.711 MPaG. After the pressure in the autoclave decreased to 0.696 MPaG, the pressure was released to return to atmospheric pressure. The reaction product was dried, so that 1.82 g of a fluororesin was obtained. The resulting resin contained 1,2-difluoroethylene, TFE and HFO-1234yf at a mol% ratio of 58.9/32.6/8.5. The melting point was 127.8°C.

### Comparative Example 1

The internal atmosphere of a 500 ml stainless steel autoclave was sufficiently replaced with vacuum nitrogen. The inside of the autoclave was then evacuated, and 150 g of HFE-347pc-f, 4.0 g of TFE, and 23.0 g of 1,2-difluoroethylene were introduced into the evacuated autoclave. The autoclave was then warmed to 28°C. Next, 2.0 g of DHP-H was fed into the autoclave, so that polymerization was initiated. The starting pressure in the polymerization was 0.5 MPaG. In order to maintain the polymerization pressure, a mixture gas having a ratio of 1,2-difluoroethylene/TFE=85/15 mol% was circulated. After the temperature in the autoclave was maintained at 28°C for 5.2 hours, the pressure was released to return to atmospheric pressure. The reaction product was dried, so that 12.2 g of a fluororesin was obtained. The resulting resin contained 1,2-difluoroethylene and TFE at a mol% ratio of 85.5/14.5. The melting point was 210.0°C.

### Comparative Example 2

The internal atmosphere of a 500 ml stainless steel autoclave was sufficiently replaced with vacuum nitrogen. The inside of the autoclave was then evacuated, and 150 g of HFE-347pc-f, 15.2 g of TFE, and 10.0 g of 1,2-difluoroethylene were introduced into the evacuated autoclave. The autoclave was then warmed to 28°C. Next, 2.0 g of DHP-H was fed into the autoclave, so that polymerization was initiated. The starting pressure in the polymerization was 0.5 MPaG. In order to maintain the polymerization pressure, a mixture gas having a ratio of 1,2-difluoroethylene/TFE=68/32 mol% was circulated. After the temperature in the autoclave was maintained at 28°C for 4 hours, the pressure was released to return to atmospheric pressure. The reaction product was dried, so that 10.8 g of a fluororesin was obtained. The resulting resin contained 1,2-difluoroethylene and TFE at a mol% ratio of 67.8/32.2. The melting point was 217.2°C.

### Comparative Example 3

The internal atmosphere of a 500 ml stainless steel autoclave was sufficiently replaced with vacuum nitrogen. The inside of the autoclave was then evacuated, and 150 g of HFE-347pc-f, 15.0 g of TFE, and 9.4 g of 1,2-difluoroethylene were introduced into the evacuated autoclave. The autoclave was then warmed to 28°C. Next, 1.5 g of DHP-H was fed into the autoclave, so that polymerization was initiated. The starting pressure in the polymerization was 0.5 MPaG. In order to maintain the polymerization pressure, a mixture gas having a ratio of 1,2-difluoroethylene/TFE=54/46 mol% was circulated. After the temperature in the autoclave was maintained at 28°C for 2.8 hours, the pressure was released to return to atmospheric pressure. The reaction product was dried, so that 10.7 g of a fluororesin was obtained. The resulting resin contained 1,2-difluoroethylene and TFE at a mol% ratio of 53.9/46.1. The melting point was 232.8°C.

### Comparative Example 4

The internal atmosphere of a 500 ml stainless steel autoclave was sufficiently replaced with vacuum nitrogen. The inside of the autoclave was then evacuated, and 150 g of HFE-347pc-f, 20.0 g of TFE, and 6.8 g of 1,2-difluoroethylene were introduced into the evacuated autoclave. The autoclave was then warmed to 28°C. Next, 1.5 g of DHP-H was fed into the autoclave, so that polymerization was initiated. The starting pressure in the polymerization was 0.5 MPaG. In order to maintain the polymerization pressure, a mixture gas having a ratio of 1,2-difluoroethylene/TFE=42/58 mol% was circulated. After the temperature in the autoclave was maintained at 28°C for 1.8 hours, the pressure was released to return to atmospheric pressure. The reaction product was dried, so that 13.1 g of a fluororesin was obtained. The resulting resin contained 1,2-difluoroethylene and TFE at a mol% ratio of 42.4/57.6. The melting point was 246.5°C.

### Comparative Example 5

The internal atmosphere of a 500 ml stainless steel autoclave was sufficiently replaced with vacuum nitrogen. The inside of the autoclave was then evacuated, and 150 g of HFE-347pc-f, 26.0 g of TFE, and 2.1 g of 1,2-difluoroethylene were introduced into the evacuated autoclave. The autoclave was then warmed to 28°C. Next, 1.0 g of DHP-H was fed into the autoclave, so that polymerization was initiated. The starting pressure in the polymerization was 0.6 MPaG. In order to maintain the polymerization pressure, a mixture gas having a ratio of 1,2-difluoroethylene/TFE=18/82 mol% was circulated. After the temperature in the autoclave was maintained at 28°C for 45 minutes, the pressure was released to return to atmospheric pressure. The reaction product was dried, so that 11.3 g of a fluororesin was obtained. The resulting resin contained 1,2-difluoroethylene and TFE at a mol% ratio of 19.0/81.0. The melting point was 288.8°C.

### Comparative Example 6

After 1,330 g of deionized water and 0.67 g of methylcellulose were introduced into a stainless steel autoclave having an internal volume of 1.8 L, the internal atmosphere of the autoclave was sufficiently replaced with vacuum nitrogen. The inside of the autoclave was then evacuated, and 250 g of 1,2-difluoroethylene, 1 ml of methanol and 2 g of a methanol solution containing 50 mass% of dinormalpropyl peroxycarbonate were introduced into the evacuated autoclave. The autoclave was then warmed to 45°C over 1.5 hours and then maintained at 45°C for 3 hours. Then, 4 g of the methanol solution containing 50 mass% of dinormalpropyl peroxycarbonate was further introduced therein. The temperature was then kept at 45°C for 4 hours. The ultimate pressure during this period was 2.7 MPaG. The pressure was then released to return to atmospheric pressure. The reaction product was washed with water and dried, so that 198 g of a fluororesin powder was obtained. The melting point was 196.3°C.

### Comparative Example 7

After 500 g of deionized water was introduced into a stainless steel autoclave having an internal volume of 1.8 L, the internal atmosphere of the autoclave was sufficiently replaced with vacuum nitrogen. The inside of the autoclave was then evacuated, and 500 g of HFE-347pc-f, 323 g of PMVE, 3 g of 1,2-difluoroethylene, and 21 g of TFE were introduced into the evacuated autoclave. The autoclave was then warmed to 28°C. Next, 6.0 g of DHP-H was fed into the autoclave, so that polymerization was initiated. The starting pressure in the polymerization was 0.40 MPaG. After the temperature in the autoclave was maintained at 28°C for 6 hours, the pressure was released to return to atmospheric pressure. The reaction product was washed with water and dried, so that 2.5 g of a fluororesin powder was obtained. The resulting resin contained 1,2-difluoroethylene, TFE and PMVE at a mol% ratio of 22.2/39.5/38.3. No melting point was observed.

Each of the resulting copolymer was evaluated by the following methods. The results are shown in Table 1.

### (Composition ratio of copolymer)

The copolymer composition was measured by solution NMR or melt NMR.

### <Solution NMR>

Measurement apparatus: VNMRS 400 manufactured by Varian, resonance frequency: 376.04 (Sfrq), pulse width: 30°

### <Melt NMR>

Measurement apparatus: AVANCE 300 manufactured by Bruker Japan K.K., resonance frequency: 282.40 [MHz], pulse width: 45°

### (Melting point)

The measurement can be performed according to ASTM D4591 using a differential scanning calorimeter. Specifically, using a differential scanning calorimeter RDC220 (manufactured by Seiko Instruments Inc.), the heat measurement of a copolymer was performed at a temperature increasing rate of 10°C/min, and the temperature corresponding to the peak of the resulting endothermic curve was designated as the melting point.

### (Total light transmittance and haze)

The powder of the copolymer was compression-molded at a temperature 20 to 40°C more than the melting point of the copolymer, so that a sheet-like formed article having a thickness of 0.5 mm was obtained.

The resulting pressed sheet having a thickness of 0.5 mm was subjected to the measurement of total light transmittance according to JIS K7361-1, respectively, and the measurement of haze according to JIS K7136. As the measurement instrument, HAZE Meter NDH7000SP (manufactured by Nippon Denshoku Industries Co., Ltd.) was used.

### (Refractive index)

The powder of the copolymer was compression-molded at a temperature 20 to 40°C more than the melting point of the copolymer, so that a sheet-like formed article having a thickness of 0.5 mm was obtained.

The resulting pressed sheet having a thickness of 0.5 mm was subjected to measurement of refractive index using an Abbe refractometer (manufactured by Atago Co., Ltd.) at 25°C with sodium D rays as a light source.

**[Table 1]**

| | 1,2-Difluoroethylene/ TFE | Structural formula (1) | Content of structural formula (1) | Melting point* | Transmittance | HAZE | Refractive index |
|---|---|---|---|---|---|---|---|
| | mol% ratio | | mol% | °C | % | - | - |
| Example 1 | 49.2/50.8 | HFP | 6.5 | 190.7 | 88.3 | 41.9 | 1.366 |
| Example 2 | 29.0/71.0 | HFP | 11.8 | 180.0 | 84.2 | 30.1 | 1.354 |
| Example 3 | 80.6/19.4 | HFP | 8.6 | 166.5 | 93.1 | 10.0 | 1.378 |
| Example 4 | 22.7/77.3 | HFP | 5.2 | 243.4 | 81.7 | 30.8 | 1.358 |
| Example 5 | 31.9/68.1 | HFP | 4.6 | 227.9 | 82.6 | 36.8 | 1.362 |
| Example 6 | 36.8/63.2 | HFP | 12.7 | 162.3 | 91.8 | 38.8 | 1.367 |
| Example 7 | 22.2/77.8 | HFP | 7.6 | 225.2 | 83.7 | 25.2 | 1.356 |
| Example 8 | 45.0/55.0 | HFP | 6.9 | 189.7 | 86.4 | 35.4 | 1.354 |
| Example 9 | 24.9/75.1 | HFP | 15.2 | 189.7 | 85.4 | 38.1 | 1.353 |
| Example 10 | 43.1/56.9 | PMVE | 10.4 | 156.5 | 93.5 | 11.0 | 1.352 |
| Example 11 | 21.0/79.0 | PMVE | 14.6 | 172.2 | 87.2 | 36.3 | 1.338 |
| Example 12 | 16.7/83.3 | PMVE | 17.2 | 176.9 | 86.9 | 39.5 | 1.341 |
| Example 13 | 41.9/58.1 | PMVE | 8.7 | 185.3 | 87.3 | 21.7 | 1.359 |
| Example 14 | 31.2/68.8 | PMVE | 25.9 | 101.7 | 87.5 | 30.8 | 1.336 |
| Example 15 | 46.4/53.4 | PMVE | 11.4 | 157.7 | 84.0 | 35.0 | 1.359 |
| Example 16 | 16.7/83.3 | PMVE | 22.1 | 157.5 | 80.1 | 43.0 | 1.338 |
| Example 17 | 30.1/69.9 | PMVE | 14.6 | 157.7 | 86.0 | 43.1 | 1.328 |
| Example 18 | 50.5/49.5 | PMVE | 12.0 | 137.9 | 88.4 | 19.3 | 1.359 |
| Example 19 | 32.8/67.2 | PMVE | 18.2 | 141.1 | 82.5 | 36.5 | 1.349 |
| Example 20 | 52.4/47.6 | HFO-1234yf | 15.9 | 109.7 | 95.2 | 9.1 | 1.365 |
| Example 21 | 35.9/64.1 | HFO-1234yf | 8.8 | 189.7 | 86.0 | 39.0 | 1.358 |
| Example 22 | 64.4/35.6 | HFO-1234yf | 8.5 | 127.8 | 91.0 | 18.2 | 1.379 |
| Comparative Example 1 | 85.5/14.5 | - | - | 210.0 | 87.9 | 30.5 | 1.394 |
| Comparative Example 2 | 67.8/32.2 | - | - | 217.2 | 84.3 | 78.3 | 1.382 |
| Comparative Example 3 | 53.9/46.1 | - | - | 232.8 | 84.9 | 90.9 | 1.374 |
| Comparative Example 4 | 42.4/57.6 | - | - | 246.5 | 84.9 | 85.1 | 1.368 |
| Comparative Example 5 | 19.0/81.0 | - | - | 288.8 | 80.5 | 91.6 | 1.357 |
| Comparative Example 6 | 100/0 | - | - | 196.3 | 88.9 | 38.7 | 1.405 |
| Comparative Example 7 | 36.0/64.0 | PMVE | 38.3 | Unidentified | 94.2 | 8.2 | 1.328 |

From the results in Table 1 described above, it is shown that the copolymer of the present disclosure has excellent physical properties including the effects of low refractive index, transparency, and heat resistance.

### Industrial Applicability

The copolymer of the present disclosure can be suitably used in melt-forming, coating agents, etc.

## Claims

1. A copolymer comprising:
a structural unit (A) derived from 1,2-difluoroethylene,
a structural unit (B) derived from tetrafluoroethylene, and
a structural unit (C) represented by the following structural formula (1)
wherein a copolymerization ratio between the structural unit (A) and the structural unit (B) is 10/90 to 85/15 mol%,
a content of the structural unit (C) is 0.1 to 30 mol% relative to the total amount of resin, and
an amount of structural units other than the structural units (A) to (C) is 15 mol% or less relative to the total amount of the copolymer: 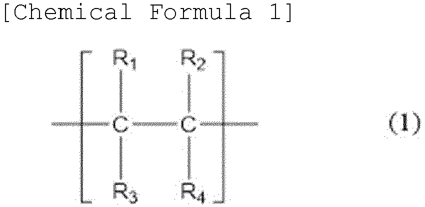 wherein R₁ is fluorine, a partly or wholly fluorinated hydrocarbon group having 5 or less carbon atoms, or OR₅ group, wherein R₅ group is a partly or wholly fluorinated hydrocarbon group having 5 or less carbon atoms; R₂, R₃ and R₄ are each independently hydrogen or fluorine.

2. The copolymer according to claim 1, having a refractive index of 1.320 to 1.380 wherein the refractive index is measured as explained in the description.

3. The copolymer according to claim 1 or 2, having a total light transmittance of 80% or more and a haze value of 45% or less when formed into a pressed sheet having a thickness of 0.5 mm wherein the total light transmittance and the haze value are measured as explained in the description.

4. The copolymer according to any one of claims 1 to 3, having a melting point of 100°C or more wherein the melting point is measured as explained in the description.

5. The copolymer according to any one of claims 1 to 4, wherein the structural unit (C) is a structure derived from at least one monomer selected from the group consisting of hexafluoropropylene, 2,3,3,3-tetrafluoropropene, 1,3,3,3-tetrafluoropropene (Z-form) and 1,3,3,3-tetrafluoropropene (E-form), and perfluoromethyl vinyl ether.

6. The copolymer according to any one of claims 1 to 5, wherein the content of the structural unit (C) is 4.0 to 27 mol% relative to the total amount of resin.

7. A formed article comprising the copolymer according to any one of claims 1 to 6, wherein the formed article is a film, a sheet, a tube, a hose, a sealing material, an electric wire coating material, an optical fiber cable, or a melt-spun fiber.

## Patentansprüche

1. Copolymer, umfassend:
eine Struktureinheit (A), die von 1,2-Difluorethylen abgeleitet ist,
eine Struktureinheit (B), die von Tetrafluorethylen abgeleitet ist, und
eine Struktureinheit (C), die durch die folgende Strukturformel (1) dargestellt wird
wobei das Copolymerisationsverhältnis zwischen der Struktureinheit (A) und der Struktureinheit (B) 10/90 bis 85/15 Mol-% beträgt,
der Gehalt der Struktureinheit (C) 0,1 bis 30 Mol-% bezogen auf die Gesamtmenge des Harzes beträgt, und
die Menge an Struktureinheiten, die nicht zu den Struktureinheiten (A) bis (C) gehören, 15 Mol-% oder weniger bezogen auf die Gesamtmenge des Copolymers beträgt: 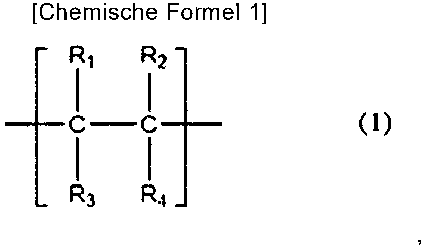 wobei R₁ Fluor, eine teilweise oder vollständig fluorierte Kohlenwasserstoffgruppe mit 5 oder weniger Kohlenstoffatomen oder eine OR₅-Gruppe ist, wobei die R₅-Gruppe eine teilweise oder vollständig fluorierte Kohlenwasserstoffgruppe mit 5 oder weniger Kohlenstoffatomen ist; R₂, R₃ und R₄ jeweils unabhängig voneinander Wasserstoff oder Fluor sind.

2. Copolymer nach Anspruch 1, mit einem Brechungsindex von 1,320 bis 1,380, wobei der Brechungsindex, wie in der Beschreibung erläutert, gemessen wird.

3. Copolymer nach Anspruch 1 oder 2, mit einer Gesamtlichtdurchlässigkeit von 80 % oder mehr und einem Trübungswert von 45 % oder weniger, wenn es zu einer gepressten Platte mit einer Dicke von 0,5 mm geformt wird, wobei die Gesamtlichtdurchlässigkeit und der Trübungswert, wie in der Beschreibung erläutert, gemessen werden.

4. Copolymer nach einem der Ansprüche 1 bis 3, mit einem Schmelzpunkt von 100 °C oder mehr, wobei der Schmelzpunkt, wie in der Beschreibung erläutert, gemessen wird.

5. Copolymer nach einem der Ansprüche 1 bis 4, wobei die Struktureinheit (C) eine Struktur ist, die von mindestens einem Monomer abgeleitet ist, das aus der Gruppe ausgewählt ist, die aus Hexafluorpropylen, 2,3,3,3-Tetrafluorpropen, 1,3,3,3-Tetrafluorpropen (Z-Form) und 1,3,3,3-Tetrafluorpropen (E-Form) sowie Perfluormethylvinylether besteht.

6. Copolymer nach einem der Ansprüche 1 bis 5, wobei der Gehalt der Struktureinheit (C) 4,0 bis 27 Mol-% bezogen auf die Gesamtmenge des Harzes beträgt.

7. Formkörper, umfassend das Copolymer nach einem der Ansprüche 1 bis 6, wobei der Formkörper eine Folie, eine Platte, ein Rohr, ein Schlauch, ein Dichtungsmaterial, ein Beschichtungsmaterial für elektrische Drähte, ein Glasfaserkabel oder eine schmelzgesponnene Faser ist.

## Revendications

1. Copolymère comprenant :
une unité (A) structurelle dérivée du 1,2-difluoroéthylène,
une unité (B) structurelle dérivée du tétrafluoroéthylène, et
une unité (C) structurelle représentée par la formule (1) structurelle suivante
dans lequel le rapport de copolymérisation entre l'unité (A) structurelle et l'unité (B) structurelle est compris entre 10/90 et 85/15 % en moles,
la teneur de l'unité (C) structurelle est comprise entre 0,1 et 30 % en moles par rapport à la quantité totale de résine, et
une quantité d'unités structurelles autres que les unités (A) à (C) structurelles est de 15 % en moles ou moins par rapport à la quantité totale du copolymère : 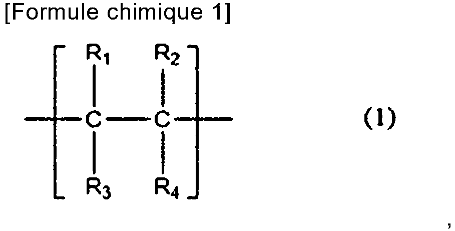 dans lequel R₁ est du fluor, un groupe hydrocarboné partiellement ou entièrement fluoré présentant 5 atomes de carbone ou moins, ou un groupe OR₅, dans lequel le groupe R₅ est un groupe hydrocarboné partiellement ou entièrement fluoré présentant 5 atomes de carbone ou moins ; R₂, R₃ et R₄ sont chacun indépendamment de l'hydrogène ou du fluor.

2. Copolymère selon la revendication 1, présentant un indice de réfraction de 1,320 à 1,380 dans lequel l'indice de réfraction est mesuré comme expliqué dans la description.

3. Copolymère selon la revendication 1 ou la revendication 2, présentant une transmittance lumineuse totale de 80 % ou plus et une valeur de voile de 45 % ou moins lorsqu'elle est formée en une feuille pressée d'une épaisseur de 0,5 mm, où la transmittance lumineuse totale et la valeur de voile sont mesurées comme expliqué dans la description.

4. Copolymère selon l'une quelconque des revendications 1 à 3, présentant un point de fusion de 100 °C ou plus, dans lequel le point de fusion est mesuré comme expliqué dans la description.

5. Copolymère selon l'une quelconque des revendications 1 à 4, dans lequel l'unité (C) structurelle est une structure dérivée d'au moins un monomère sélectionné parmi le groupe constitué par l'hexafluoropropylène, le 2,3,3,3-tétrafluoropropène, le 1,3,3,3-tétrafluoropropène (forme Z), le 1,3,3,3-tétrafluoropropène (forme E) et le perfluorométhyl vinyléther.

6. Copolymère selon l'une quelconque des revendications 1 à 5, dans lequel la teneur de l'unité (C) structurelle est comprise entre 4,0 et 27 % en moles par rapport à la quantité totale de résine.

7. Article formé comprenant le copolymère selon l'une quelconque des revendications 1 à 6, dans lequel l'article formé est un film, une feuille, un tube, un tuyau, un matériau d'étanchéité, un matériau de revêtement pour fil électrique, un câble à fibre optique ou une fibre filée par fusion.
